# EUROPEAN PATENT SPECIFICATION

(11) **EP 2 383 174 B1**
(45) Date of publication and mention of the grant of the patent: **23.07.2014**
(21) Application number: 11163983.7
(22) Date of filing: 28.04.2011
(51) Int. Cl.: B62J 35/00, B60K 15/067

(54) **Saddle-Riding Vehicle**
Sattelfahrzeug
Véhicule de type à enfourcher

(30) Priority: 28.04.2010 JP 2010102940
(43) Date of publication of application: 02.11.2011
(73) Proprietor: Yamaha Hatsudoki Kabushiki Kaisha, Shizuoka-ken Shizuoka 438-8501 (JP)
(72) Inventor: Fukushima, Takaaki, Iwata-shi Shizuoka 438-8501 (JP)
(74) Representative: Grünecker, Kinkeldey, Stockmair & Schwanhäusser

(56) References cited:
- EP-A1- 1 602 569
- JP-A- H06 234 382
- US-A- 3 475 944
- US-A- 4 449 723
- US-A1- 2005 045 399

## Description

The present invention relates to a saddle-riding vehicle according to the preamble of independent claim 1. Such a saddle-riding vehicle can be taken from the prior art document US 2005/0045399 A1. An engaging member is provided on the fuel tank. Said engaging member is adapted to engage with a support member for supporting the tank on the frame. The engaging member is constituted by two members, a base member made of aluminium alloy welded to the side wall of the fuel tank and an engaging body installed to the base member with bolts.

In a saddle-riding vehicle, a fuel tank is attached to a body frame using an attaching member. Allowing the attaching member to directly contact the fuel tank using a method such as arc welding, however, tends to make holes when welding due to the thin plate material of the fuel tank. Therefore, previously, a plate member is welded to a fuel tank by resistance welding and then an attaching member is welded to the fuel tank.

For example, in the motorcycle disclosed by Japanese Patent Publication No. 3489918, a bearing member is attached to a fuel tank using a patch plate. The bearing member is a member for attaching the fuel tank to the body frame. The bearing member includes a mounting hole for receiving a mounting rubber. The mounting rubber is fitted into a cylindrical mounting member, and the mounting member projects from the body frame horizontally to the body. The patch plate is a separate member from the bearing member, and is attached directly to the fuel tank.

A configuration of the above description has many parts. This results in many production steps and increased production costs.

It is an object of the present invention to provide a saddle-riding vehicle having a fuel tank being secured in an easy and reliable manner.

According to the present invention said object is solved by a saddle-riding vehicle having the features of independent claim 1. Preferred embodiments are laid down in the dependent claims.

Accordingly, it is provided a saddle-riding vehicle that can prevent holes being made in a fuel tank by welding, and can prevent increase in production costs.

Hereinafter, the present invention is illustrated and explained in detail by means of preferred embodiments in conjunction with the accompanying drawings. In the drawings wherein:
- FIG. 1: is a side view of a motorcycle according to an embodiment of the present teaching;
- FIG. 2: is a section view of a fuel tank and a body frame of the motorcycle;
- FIG. 3: is a perspective view of the fuel tank;
- FIG. 4: is a perspective view of an attaching member;
- FIG. 5: is a view of the attaching member viewed from the side;
- FIG. 6: is a view of the attaching member viewed from the front;
- FIG. 7: is a view showing welding locations on the attaching member, and
- FIG. 8: is a view showing a method for producing the attaching member.

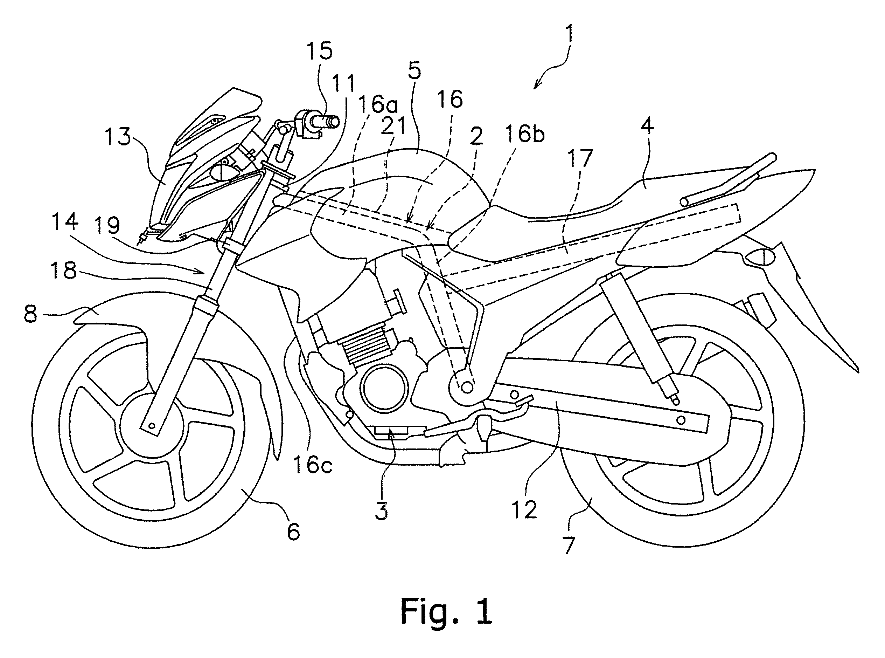

FIG. 1 shows a motorcycle 1 according to an embodiment of the present teaching. FIG. 1 is a side view of the motorcycle 1. In the following description, "left and right" refers to left and right as viewed by a rider seated on the motorcycle 1. This motorcycle 1 is provided with a body frame 2, an engine 3, a seat 4, a fuel tank 5, a front wheel 6, and a rear wheel 7.

The body frame 2 includes a head pipe 11, a front frame 16, and a rear frame 17. A front fork 14 is supported by the head pipe 11. A handle 15 is fixed to the upper end of the front fork 14. A headlight unit 13 is arranged in front of the head pipe 11. The front fork 14 includes left and right shock absorbers 18 and a bracket 19. The left and right shock absorbers 18 are arranged separated horizontally to the body by a gap. FIG. 1 shows just the left shock absorber 18 of the left and right shock absorbers 18. The front wheel 6 is rotatably supported by the lower end of the front fork 14; that is, the lower end of the shock absorbers 18. A front fender 8 is arranged above the front wheel 6. The bracket 19 supports the upper portion of the shock absorbers 18.

The front frame 16 is composed of a pipe member bent in a plurality of locations. The front frame 16 includes a first frame section 16a, a second frame section 16b, and a third frame section 16c. The first frame section 16a is connected to the head pipe 11, and extends in the front-back direction of the vehicle body. The second frame section 16b extends diagonally backward and downward from the back end of the first frame section 16a. The third frame section 16c extends diagonally downward from the head pipe 11. A swing arm 12, which can revolve (swing) vertically, is connected to the back end of the front frame 16. The rear wheel 7 is rotatably supported by the back end of the swing arm 12.

The rear frame 17 is composed of left and right pipe-shaped members. FIG. 1 shows just the pipe-shaped member located on the left of the left and right pipe-shaped members. The rear frame 17 is connected to the front frame 16, and extends in back from the front frame 16.

The seat 4 and the fuel tank 5 are attached to an upper portion of the body frame 2. The fuel tank 5 is arranged in front of the seat 4. The fuel tank 5 is arranged above the first frame section 16a of the front frame 16. The seat 4 is arranged above the rear frame 17.

The engine 3 is an air-cooled four-stroke engine, and transmits drive power through a chain (not shown) to the rear wheel 7. The engine 3 is arranged below the fuel tank 5, and is supported by the front frame 16.

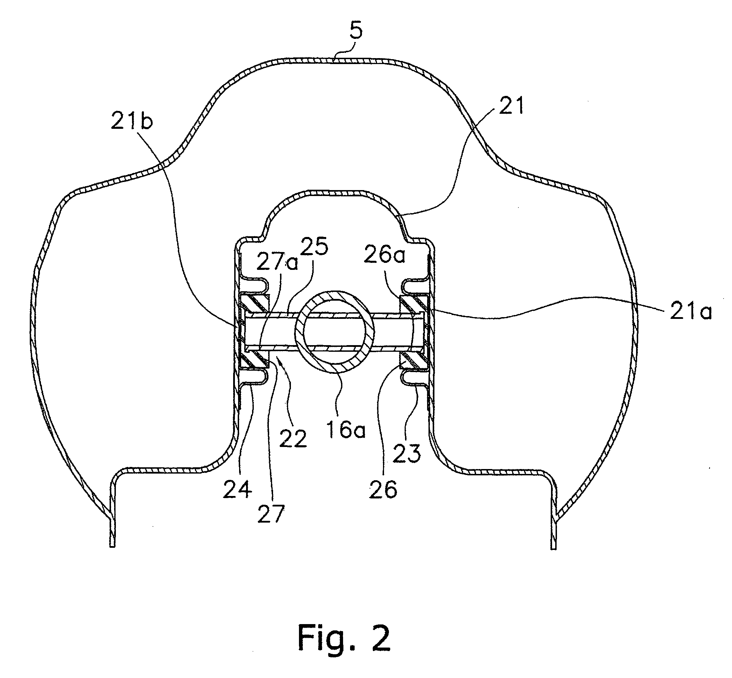

Next, the attaching configuration of the fuel tank 5 will be described. FIG. 2 is a section view of the fuel tank 5 and the first frame section 16a of the front frame 16 viewed from the front. The fuel tank 5 is made of metal, and includes an internal space where fuel is stored. The fuel tank 5 is a thin member with a small thickness of, for example, 1 mm or less. A tank indentation 21 (first indentation) is formed in the floor of the fuel tank 5 as shown in FIG. 2. The tank indentation 21 has a shape which is indented facing upward from the floor of the fuel tank 5, and extends in the front-back direction of the vehicle. The first frame section 16a of the front frame 16 is arranged in the space enclosed by the tank indentation 21. As shown in FIG. 2, the motorcycle 1 further includes a tank support member 22 and a pair of attaching members 23 and 24.

The tank support member 22 is a member for supporting the fuel tank 5. The tank support member 22 is disposed so as to project from the first frame section 16a transversely with respect to the body. The tank support member 22 includes a support frame member 25 and a pair of shock absorber members 26 and 27. The support frame member 25 is a pipe-shaped member disposed so as to allow the first frame section 16a to pass therethrough. The support frame member 25 may be fixed to the surface of the first frame section 16a using fixing means such as a weld. The pair of shock absorber members 26 and 27 are attached to each end of the support frame member 25. Of the two shock absorber members 26 and 27, the left shock absorber member 26 is attached to the left end of the support frame member 25, while the right shock absorber member 27 is attached to the right end of the support frame member 25. The shock absorber members 26 and 27 are formed of an elastic material such as rubber. The shock absorber members 26 and 27 have a substantially cylindrical outer shape. A depression 26a is formed in the shock absorber member 26 and a depression 27a is formed in the shock absorber member 27. Of the two ends of the support frame member 25, one is inserted in the depression 26a in the shock absorber member 26, and the other is inserted in the depression 27a in the shock absorber member 27.

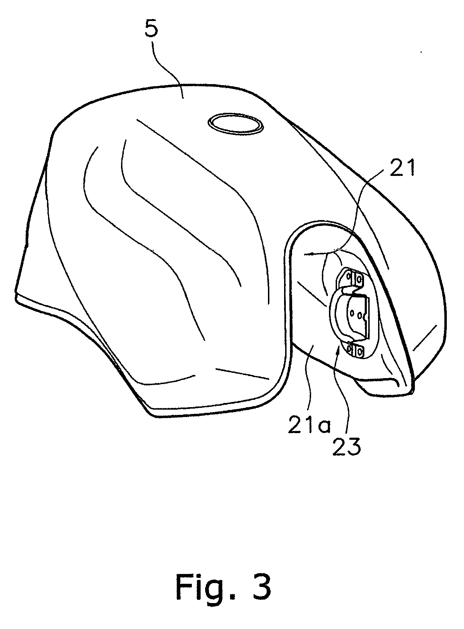

The pair of attaching members 23 and 24 are members for attaching the fuel tank 5 to the body frame 2. The attaching members 23 and 24 are welded directly to the fuel tank 5. Specifically, of the pair of attaching members 23 and 24, the left attaching member 23 is fixed to a left side surface 21 a of the tank indentation 21 in the fuel tank 5 as shown in FIG. 3. The right attaching member 24 of the pair of attaching members 23 and 24 is fixed to a right side surface 21 b of the tank indentation 21 in the fuel tank 5 (see FIG. 2). The pair of attaching members 23 and 24 have the same shape, and are arranged symmetrically on the left and the right.

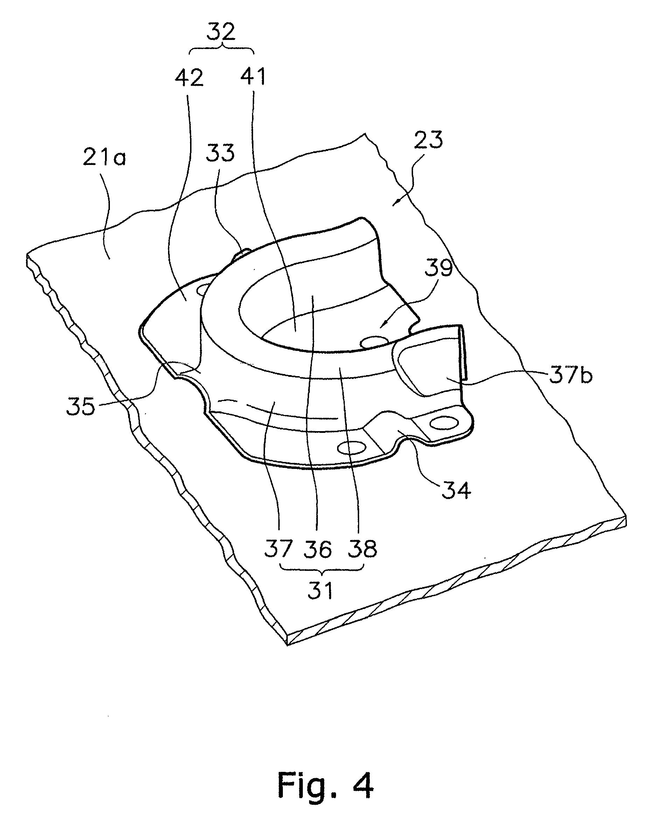

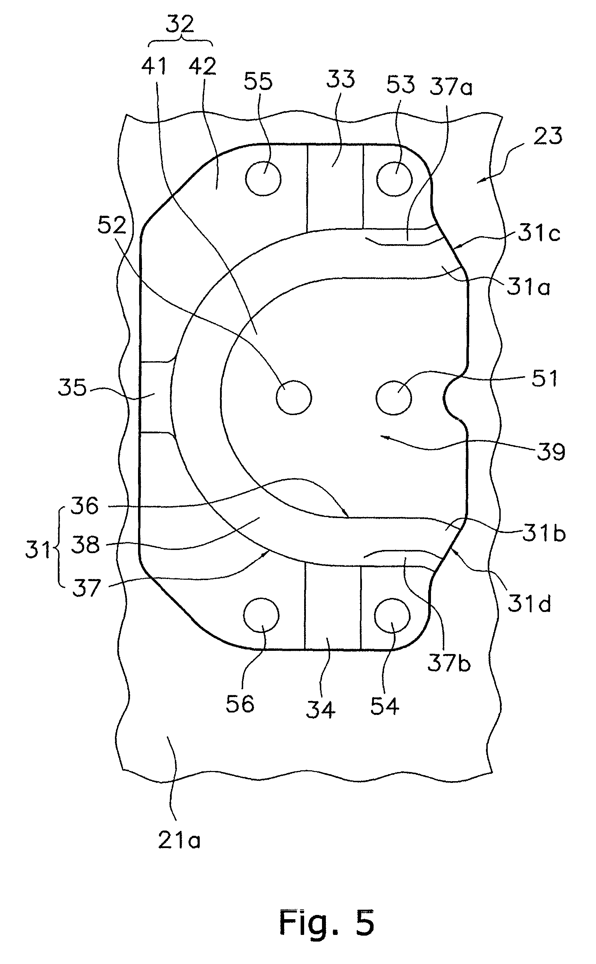

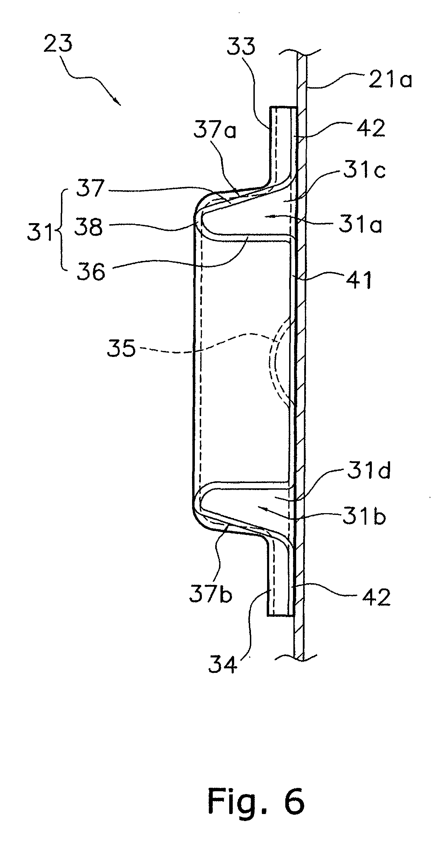

Next, the configuration of the attaching member 23 will be described in detail with reference to FIGS. 4 to 6. FIG. 4 is a perspective view of the attaching member 23 welded to the left side surface 21 a of the fuel tank 5. FIG. 5 is a view of the attaching member 23 viewed from the side. FIG. 6 is a view of the attaching member 23 seen from the front. In the following description, terms such as front and back, left and right, vertically, or the side refer to the state of attachment to the fuel tank 5 in front and back, left and right, vertically, or the side as viewed by a rider seated on the motorcycle 1. As shown in FIG. 4, the attaching member 23 includes a first projection 31, a plate section 32, and a plurality of second projections 33, 34, and 35. The first projection 31, the plate section 32, and the plurality of second projections 33, 34, and 35 are formed of one piece, and the attaching member 23 is composed of a single part. As shown in FIG. 5, the attaching member 23 has a vertically symmetrical shape.

The first projection 31 has a shape projected from the plate section 32, and composes a socket 39 into which the tank support member 22 is inserted as described later. The first projection 31 has a curved shape so as to surround a portion of the perimeter of the tank support member 22. Specifically, the first projection 31 has a shape curved such that the both ends of the first projection 31 face forward (to the right in FIG. 5). That is, the first projection 31 has a generally U-shaped shape. Of the two front ends of the first projection 31, the upper front end is called the first front end 31 a, and the lower front end is called the second front end 31 b. The first front end 31 a and the second front end 31 b are disposed such that the gap between increases as one moves forward. As a result, the tank support member 22 may be readily inserted in the socket 39 from the front. As shown in FIG. 6, the first projection 31 forms an opening in the front edge of the attaching member 23. Specifically, the first projection 31 forms an opening in the first front end 31 a and the second front end 31 b. Therefore, the space enclosed by the first projection 31 and the fuel tank 5 communicates with the space outside through an opening 31 c of the first front end 31a and an opening 31 d of the second front end 31 b.

The first projection 31 includes a first wall 36, a second wall 37, and a connecting section 38. The first wall 36 is a portion for contacting the tank support member 22. Specifically, the first wall 36 contacts the shock absorber members 26 of the tank support member 22. The first wall 36 is disposed along the curved shape of the first projection 31 as shown in FIG. 5. The second wall 37 is a portion disposed in a location opposite the first wall 36. The second wall 37 is arranged separated from the first wall 36 by a gap. The second wall 37 is arranged outside the first wall 36 when viewed from the side of the attaching member 23. The second wall 37 is disposed along the curved shape of the first projection 31. A plurality of wall indentations 37a and 37b (second indentations) are disposed in the second wall 37. The wall indentations 37a and 37b have indented shapes facing the inside of the first projection 31. The wall indentations 37a and 37b have indented shapes toward the first wall 36. Of the wall indentations 37a and 37b, the first wall indentation 37a is disposed near the first front end 31 a, and is disposed in a location adjacent to a first outer weld 53 (to be described later) of the second wall 37. The second wall indentation 37b of the wall indentations 37a and 37b is disposed near the second front end 31 b, and is disposed in a location near a second outer weld 54 (to be described later) of the second wall 37. The connecting section 38 is a portion for connecting the edge on one side of the curved first wall 36 and the edge on one side the curved second wall 37 along the whole length thereof. In other words, the connecting section 38 is a portion for connecting the edge on the first frame section 16a side of the first wall 36 and the edge on the first frame section 16a side of the second wall 37. The connecting section 38, like the first wall 36 and the second wall 37, is disposed along the curved shape of the first projection 31.

The plate section 32 is a portion for welding to the left side surface 21 a of the fuel tank 5 by resistance welding. The plate section 32 includes a first plate section 41 and a second plate section 42. The first plate section 41 is a portion for connecting to the edge on the other side of the first wall 36. The first plate section 41 is located inside the curve of the first projection 31. Specifically, the first plate section 41 is continuously surrounded above, behind, and below by the first projection 31. The first plate section 41 composes the socket 39 into which, in conjunction with the first projection 31, the tank support member 22 is inserted. The first plate section 41 faces the side surface of the tank support member 22. The second plate section 42 is a portion for connecting to the edge on the other side of the second wall 37. The second plate section 42 is located outside the curve of the first projection 31. Specifically, the second plate section 42 is arranged so as to continuously surround above, behind, and below the first projection 31. The upper edge of the second plate section 42 composes the upper edge of the attaching member 23. The back edge of the second plate section 42 composes the back edge of the attaching member 23. The lower edge of the second plate section 42 composes the lower edge of the attaching member 23. The front edge of the second plate section 42, the front edge of the first projection 31, and the front edge of the first plate section 41 compose the front edge of the attaching member 23.

The plurality of second projections 33, 34, and 35 project from the second plate section 42 and form openings at the edge of the second plate section 42. The plurality of second projections 33, 34, and 35 are an upper second projection 33, a lower second projection 34, and a back second projection 35. The upper second projection 33 is arranged above the first projection 31 and extends vertically. The upper second projection 33 is disposed across the second wall 37 and the upper edge of the attaching member 23, and forms an opening in the upper edge of the attaching member 23. The lower second projection 34 is disposed below the first projection 31, and extends vertically. The lower second projection 34 is disposed across the second wall 37 and the lower edge of the attaching member 23, and forms an opening in the lower edge of the attaching member 23. The back second projection 35 is arranged in back of the first projection 31, and extends in front and back. The back second projection 35 is disposed along the second wall 37 and the back edge of the attaching member 23, and forms an opening in the back edge of the attaching member 23. The space enclosed by these second projections 33, 34, and 35 and the left side surface 21 a of the fuel tank 5 communicates with the space enclosed by the first projection 31 and the left side surface 21 a of the fuel tank 5. Therefore, the space enclosed by the first projection 31 and the left side surface 21a of the fuel tank 5 communicates with the outside through the space enclosed by these second projections 33, 34, and 35 and the left side surface 21 a of the fuel tank 5.

As shown in FIG. 5, a plurality of welds 51 to 56, which have been welded to the left side surface 21a of the fuel tank 5, are disposed on the plate section 32 of the attaching member 23. These welds 51 to 56 are formed using a resistance welding such as spot welding. A plurality of inside welds 51 and 52 (first welds) are disposed on the first plate section 41. The plurality of inside welds 51 and 52 are a first inside weld 51 and a second inside weld 52. The first inside weld 51 and the second inside weld 52 are disposed in a middle section of the first plate section 41 vertically. The first inside weld 51 and the second inside weld 52 are disposed in the front-back direction, and the first inside weld 51 is located further forward than the second inside weld 52.

A plurality of outer welds 53 to 56 (second welds) are disposed on the second plate section 42. The plurality of outer welds 53 to 56 are first to fourth outer welds 53 to 56. The first outer weld 53 and the third outer weld 55 are disposed in a portion of the second plate section 42 located higher than the first projection 31. The first outer weld 53 and the third outer weld 55 are arranged in the front-back direction, and the upper second projection 33 is located between the first outer weld 53 and the third outer weld 55. The first outer weld 53 is arranged further forward than the third outer weld 55. The second outer weld 54 and the fourth outer weld 56 are disposed on a portion of the second plate section 42 located lower than the first projection 31. The second outer weld 54 and the fourth outer weld 56 are arranged in the front-back direction, and the lower second projection 34 is located between the second outer weld 54 and the fourth outer weld 56. The second outer weld 54 is arranged further forward than the fourth outer weld 56.

The gap between the first outer weld 53 and the second wall 37 is shorter than the gap between the third outer weld 55 and the second wall 37. The gap between the second outer weld 54 and the second wall 37 is shorter than the gap between the fourth outer weld 56 and the second wall 37. Therefore, the first wall indentation 37a and the second wall indentation 37b are disposed in locations adjacent the welds of the plurality of outer welds 53 to 56 including the shortest gap with the second wall 37.

The motorcycle 1 according to this embodiment has the following features.

Welding the plate section 32 to the fuel tank 5 by resistance welding can prevent holes being made in the fuel tank 5 during the production step for welding the fuel tank 5 and the attaching member 23. Forming the plate section 32 and the first projection 31 of one piece can prevent increasing the number of parts compared to using a patch plate to prevent making holes. Thus, these measures can prevent holes being made in the fuel tank 5 during the production step for welding the fuel tank 5 and the attaching member 23, and prevent increase in production costs.

The less difference there is between the thicknesses of the fuel tank 5 and the plate section 32, the more suitably these can be welded than by resistance welding. Therefore, the first projection 31 and the fuel tank 5 can be suitably welded by making these equally thin. The first projection 31 composes a first wall 36, a second wall 37, and a connecting section 38, and forms a three-dimensional shape. The first wall 36, the second wall 37, and the connecting section 38 are integrally formed together with the plate section 32. It is accordingly possible to ensure that the attaching member 23, and especially the first projection 31, have the necessary strength even when the attaching member 23 and the fuel tank 5 are made equally thin.

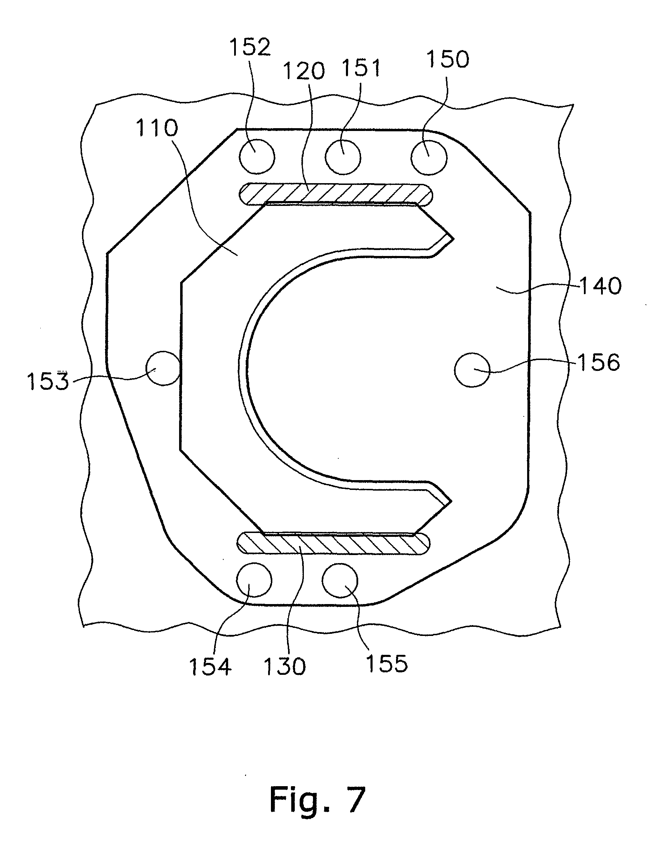

In the conventional configuration for attaching a fuel tank, as shown in FIG. 7, a bearing member 110 is welded to a fuel tank using a patch plate 140. In this configuration, the patch plate 140 is first welded to the fuel tank 5 using spot welding. Therefore, welds 150 to 156 are formed on the patch plate 140 using spot welding. Next, the bearing member 110 is welded to the patch plate 140 by arc welding. Therefore, linear welds 120 and 130 are formed on the patch plate 140 along the edges of the bearing member 110 by arc welding. The bearing member 110 is formed of one sheet of a plate material. Because a great load will be brought to bear on the bearing member 110, the thickness of the bearing member 110 is about twice the thickness of the fuel tank 5. Due to the acting of a load that has the potential to remove the bearing member 110 from the patch plate 140, arc welding, which provides peel strength, is usually employed. In the saddle-riding vehicle according to this embodiment, by contrast, integrally forming the plate section 32 and the three-dimensional first projection 31 described earlier together allows the attaching member 23 to be welded to the fuel tank 5 using just resistance welding without by arc welding. Therefore, the number of welds can be reduced. The time required for welding can also be reduced. Equally, not having to perform arc welding makes it possible to reduce the likelihood of hole formation in the fuel tank 5 during the manufacturing process.

Because the first projection 31 and the plate section 32 are integrally formed, the welds 51 to 56 can be disposed close to the first projection 31 as contrasted with welding a bearing member to the fuel tank 5 using a patch plate. Disposing the welds 51 to 56 close to the first projection 31 can reduce the moment of force on the welds 51 to 56 because loads brought to bear on the attaching member 23 are borne mainly by the first projection 31. Therefore, the necessary strength can be ensured even when the plate section 32 is thin.

By imparting the attaching member 23 with the shape described above, the attaching member 23 can be molded by pressing. This can simplify production of the attaching member 23.

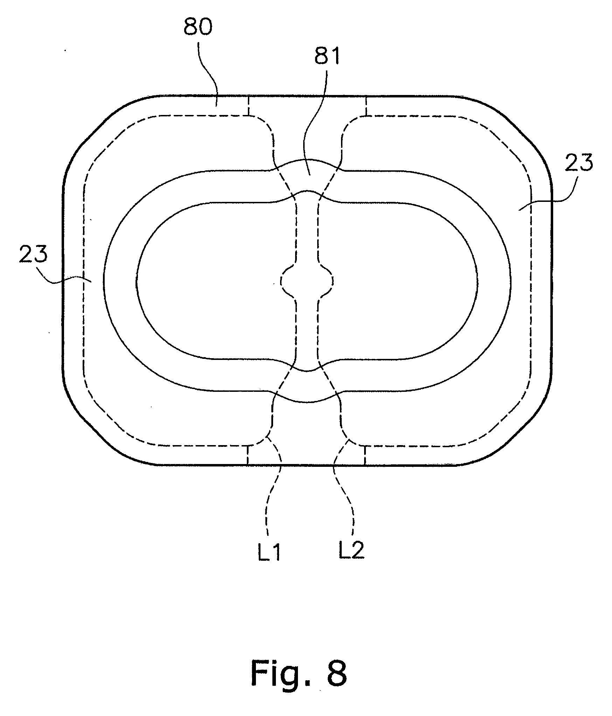

Because the first projection 31 forms an opening in the edge of the attaching member 23, pressing-forming a member configured from two integrated attaching members 23, and then splitting the member along the center, makes it possible to produce two attaching members 23. For example, as shown in FIG. 8, a plate-shaped member is pressed to fabricate a material 80 on which a nearly elliptical projection 81 has been formed. Next, two members are cut out from this material 80 as shown by the dotted lines L1 and L2. As a result, two attaching members 23 are formed. The portions of the projection 81 cut along the dotted line L1 or the dotted line L2 at this time become the openings 31c and 31d in the first projection 31 described earlier. Although not shown in FIG. 8, the second projections 33, 34, and 35 may also be formed together with the projection 81. Being able to easily produce the attaching members 23 in this way can lower production costs. Because the attaching member 23 has a vertically symmetrical shape, the two attaching members 23 produced from one member can be used as either left or right attaching members 23. This can reduce production costs even more.

The space enclosed by the first projection 31 and the fuel tank 5 communicates with the outside through the space enclosed by the second projections 33, 34, and 35 and the fuel tank 5. As a result, fluid infiltrating from the opening in the first projection 31 into the space enclosed by the first projection 31 and the fuel tank 5 can be discharged through the space enclosed by the second projections 33, 34, and 35 and the fuel tank 5. Fluid infiltrating from the opening in the first projection 31 into the space enclosed by the first projection 31 and the fuel tank 5 is readily discharged, for example, during production.

Because the welds 51 to 56 are on both the first plate section and the second plate section, these welds 51 to 56 can receive a shear load caused by the load borne by the first projection 31. The welds 51 to 56 are formed by resistance welding, and the strength of resistance welding against shear loads can improve the welding strength of the attaching member 23.

The first indentation 37a is disposed in a location of the second wall 37 adjacent to the first outer weld 53. The second indentation 37b is disposed in a location of the second wall 37 adjacent to the second outer weld 54. Therefore, the space through which a resistance welding machine is passed during welding can be enlarged. This can prevent a welding machine interfering with the first projection 31 even when the first projection 31 forms a three-dimensional shape. This can also prevent interference with the first projection 31 even when the gap between the edge of the attaching member 23 and the second wall 37 is small, allowing the outer shape of the attaching member 23 to be made smaller.

The present teaching may be applied to other saddle-riding vehicles besides the motorcycle described in the foregoing. For example, the present teaching may be applied to an all-terrain vehicle or a snowmobile. The present teaching is not limited to a sports-type motorcycle 1 such as described in the foregoing; it may be applied to a scooter or a moped.

Resistance welding is not limited to the spot welding given in the examples; another welding method such as projection welding may be used. The locations where welds are disposed and the number of welds are not limited to those described; they may be suitably modified in accordance with the shape of the attaching member.

According to the present application it is disclosed a saddle-riding vehicle, comprising: a body frame 2; a fuel tank 5 including a first indentation 21 upwardly indented and formed in a floor surface, a portion 16a of the body frame 2 arranged in the first indentation 21; a tank support member 22 for supporting the fuel tank 5, the tank support member 22 provided so as to project from the body frame 2 in the transverse direction of the vehicle; and at least one attaching member 23, 24 including a plate section 32 attached to the fuel tank 5 and a first projection 31 projecting from the plate section 32, the first projection 31 composing an inserting section into which the tank support member 22 is inserted; wherein the plate section 32 and the first projection 31 are integrally formed; the first projection 31 includes a first wall 36 for contacting the tank support member 22, a second wall 37 provided in a location opposite the first wall 36, and a connecting section 38 for connecting an edge of the first wall 36 and an edge of the second wall 37; and the plate section 32 includes a first plate section 41 connected to the first wall 36 and a second plate section 42 connected to the second wall 37.

Said saddle-riding vehicle comprises a pair of said attaching member 23, 24 attached to the fuel tank 5. The tank support member 22 includes a support frame member 25 disposed so as to project from the portion 16a of the body frame 2 transversely with respect to the vehicle, and a pair of shock absorber members 26, 27 attached to said attaching members 23, 24 respectively.

In said saddle-riding vehicle the first projection 31 forms an opening 31c, 31d in an edge of the attaching member 23, 24.

Said saddle-riding vehicle comprises at least one second projection 33, 34, 35 projecting from the plate section 32 and forming an opening in an edge of the second plate section 42; wherein a space enclosed by the second projection 33, 34, 35 and the fuel tank 5 communicate with a space enclosed by the first projection 31 and the fuel tank 5.

Preferably, said saddle-riding vehicle comprises plurality of said second projections 33, 34, 35 project from the second plate section 42 and form openings at the edge of the second plate section 42, said plurality of second projections including an upper second projection 33, a lower second projection 34, and a back second projection 35, said upper second projection 33 is arranged above the first projection 31 and extends vertically, said lower second projection 34 is disposed below the first projection 31, and extends vertically, and said back second projection 35 is arranged in back of the first projection 31, and extends in front and back direction of the vehicle.

The plate section 32 of the attaching member 23, 24 is welded to the fuel tank 5 by resistance welding. At least one inside weld 51, 52 welded to the fuel tank 5 by resistance welding is provided on the first plate section 41; and at least one outer weld 53, 54, 55, 56 welded to the fuel tank 5 by resistance welding is provided on the second plate section 42.

A second indentation 37a, 37b indented toward an interior of the first indentation 21 is provided in a location of the second wall 37 adjacent to said outer weld 53, 54. A plurality of inside welds 51, 52 welded to the fuel tank 5 by resistance welding are provided on the first plate section 41. A plurality of outer weld 53, 54, 55, 56 welded to the fuel tank 5 by resistance welding are provided on the second plate section 42.

A saddle-riding vehicle according to a first aspect is provided with a body frame, a fuel tank, a tank support member, and an attaching member. A first indentation upwardly indented is formed in a floor surface of the fuel tank. A portion of the body frame is arranged in the first indentation. The tank support member is disposed so as to project from the body frame in a transverse direction of the vehicle. The tank support member supports the fuel tank. The attaching member includes a plate section and a first projection. The plate section is welded to the fuel tank by resistance welding. The first projection projects from the plate section. The first projection composes an inserting section into which the tank support member is inserted. The plate section and the first projection are integrally formed. The first projection includes a first wall, a second wall, and a connecting section. The first wall is a portion for contacting the tank support member. The second wall is a portion provided in a location opposite the first wall. The connecting section is a portion for connecting an edge of the first wall and an edge of the second wall. The plate section includes a first plate section and a second plate section. The first plate section is for connecting to the first wall. The second plate section is for connecting to the second wall.

The saddle-riding vehicle according to the first aspect can prevent holes being made in the fuel tank during a production step for welding the fuel tank and the attaching member by welding the plate section to the fuel tank by resistance welding. Forming the plate section and the first projection of one piece can also prevent increase in production costs compared to using a separate plate member for preventing holes. This can prevent an increase in production costs. Thus, the present invention can prevent holes from being made in a fuel tank due to welding, and can prevent an increase in production costs.

A saddle-riding vehicle according to a second aspect is the saddle-riding vehicle of the first aspect, in which the first projection forms an opening in an edge of the attaching member.

In the saddle-riding vehicle according to the second aspect, the first projection forms an opening in the edge of the attaching member. Therefore, after a material of a shape combining two attaching members is pressed and thereby molded, the material can be split to produce two attaching members. Specifically, the opening in the first projection is formed in the cut sectional face of the material. Being able to easily produce attaching members in this way can lower production costs.

A saddle-riding vehicle according to a third aspect is the saddle-riding vehicle of the second aspect, and is provided with a second projection. The second projection projects from the plate section, and forms an opening in an edge of the second plate section. A space enclosed by the second projection and the fuel tank communicates with a space enclosed by the first projection and the fuel tank.

In the saddle-riding vehicle according to the third aspect, the space enclosed by the second projection and the fuel tank communicates with the space enclosed by the first projection and the fuel tank. As a result, fluid infiltrating from the opening in the first projection into the space enclosed by the first projection and the fuel tank can be discharged through the space enclosed by the second projection and the fuel tank. Fluid infiltrating from the opening in the first projection into the space enclosed by the first projection and the fuel tank is thereby readily discharged, for example, during manufacture.

A saddle-riding vehicle according to a fourth aspect is the saddle-riding vehicle of the first aspect, in which a first weld is provided on the first plate section. The first weld is a portion welded to the fuel tank by resistance welding. A second weld is provided on the second plate section. The second weld is a portion welded to the fuel tank by resistance welding.

The saddle-riding vehicle according to the fourth aspect has welds on both the first plate section and the second plate section. Therefore, these welds can receive a shear load caused by the load borne by the first projection. The welds are formed by resistance welding, and the strength of resistance welding against shear loads can improve the welding strength of the attaching member.

A saddle-riding vehicle according to a fifth aspect is the saddle-riding vehicle of the fourth aspect, in which a second indentation is provided in a location of the second wall adjacent to the second weld. The second indentation is indented toward an interior of the first indentation.

The saddle-riding vehicle according to the fifth aspect can enlarge the space through which a resistance welding machine is passed during welding. This is achieved by disposing a second indentation in a location of the second wall adjacent to the second weld. This can prevent a welding machine interfering with the first projection even when the gap between the edge of the attaching member and the second wall is small, allowing the outer shape of the attaching member to be made smaller.

The Application discloses an attaching member 23 of a saddle-riding vehicle that includes a plate section 32 and a first projection 31. The plate section 32 is welded to a fuel tank by resistance welding. The first projection 31 composes an insertion portion 39 into which a tank support member is inserted. The plate section 32 and the first projection 31 are formed of one piece. The first projection 31 includes a first wall 36, a second wall 37, and a connecting section 38. The first wall 36 is contacting the tank support member. The second wall 37 is disposed in a location opposite the first wall 36. The connecting section 38 is connecting the edge of the first wall 36 and the edge of the second wall 37. The plate section 32 includes a first plate section 41 for connecting to the first wall 36 and a second plate section 42 for connecting to the second wall 37.

### INDUSTRIAL APPLICABILITY

The present teaching can prevent holes from being made in a fuel tank due to welding, which minimizes any increase in production costs. Therefore, the present teaching is advantageous as a saddle-riding vehicle.

## Claims

1. A saddle-riding vehicle, comprising:
a body frame (2);
a fuel tank (5) including a first indentation (21) upwardly indented and formed in a floor surface, a portion (16a) of the body frame (2) arranged in the first indentation (21);
a tank support member (22) for supporting the fuel tank (5), the tank support member (22) provided so as to project from the body frame (2) in the transverse direction of the vehicle; and
at least one attaching member (23, 24) including a plate section (32) attached to the fuel tank (5) and a first projection (31) projecting from the plate section (32), the first projection (31) composing an inserting section into which the tank support member (22) is inserted; wherein
the first projection (31) includes a first wall (36) for contacting the tank support member (22), the first wall (36) is disposed along a curved shape of the first projection (31), a second wall (37) provided in a location opposite the first wall (36), the second wall (37) is disposed along the curved shape of the first projection (31),
and the plate section (32) includes a first plate section (41) connected to the first wall (36) and a second plate section (42) connected to the second wall (37), **characterized in that**
the plate section (32) which includes said first and second sections and the first projection (31) are integrally formed, the second wall (37) is arranged separated from the first wall (36) by a gap and a connecting section (38) of the first projection (31) is connecting an edge of the first wall (36) and an edge of the second wall (37) and the second wall (37) is arranged outside the first wall (36) when viewed from the side of the attaching member (23).

2. A saddle-riding vehicle according to claim 1, **characterized by** a pair of said attaching member (23, 24) attached to the fuel tank (5).

3. A saddle-riding vehicle according to claim 2, **characterized in that** the tank support member (22) includes a support frame member (25) disposed so as to project from the portion (16a) of the body frame (2) transversely with respect to the vehicle, and a pair of shock absorber members (26, 27) attached to said attaching members (23, 24) respectively.

4. A saddle-riding vehicle according to at least one of the claims 1 to 3, **characterized in that** the first projection (31) forms an opening (31 c, 31 d) in an edge of the attaching member (23, 24).

5. A saddle-riding vehicle according to at least one of the claims 1 to 4, **characterized by** at least one second projection (33, 34, 35) projecting from the plate section (32) and forming an opening in an edge of the second plate section (42); wherein
a space enclosed by the second projection (33, 34, 35) and the fuel tank (5) communicate with a space enclosed by the first projection (31) and the fuel tank (5).

6. A saddle-riding vehicle according to claim 5, **characterized by** plurality of said second projections (33, 34, 35) project from the second plate section (42) and form openings at the edge of the second plate section (42), said plurality of second projections including an upper second projection (33), a lower second projection (34), and a back second projection (35), said upper second projection (33) is arranged above the first projection (31) and extends vertically, said lower second projection (34) is disposed below the first projection (31), and extends vertically, and said back second projection (35) is arranged in back of the first projection (31), and extends in front and back direction of the vehicle.

7. A saddle-riding vehicle according to at least one of the claims 1 to 6, **characterized in that** the plate section (32) of the attaching member (23, 24) is welded to the fuel tank (5) by resistance welding.

8. A saddle-riding vehicle according to claim 7, **characterized in that** at least one inside weld (51, 52) welded to the fuel tank (5) by resistance welding is provided on the first plate section (41); and
at least one outer weld (53, 54, 55, 56) welded to the fuel tank (5) by resistance welding is provided on the second plate section (42).

9. A saddle-riding vehicle according to claim 8, **characterized in that** a second indentation (37a, 37b) indented toward an interior of the first indentation (21) is provided in a location of the second wall (37) of the first projection (31) of the attaching member (23, 24) adjacent to said outer weld (53, 54).

10. A saddle-riding vehicle according to claim 8 or 9, **characterized in that** a plurality of inside welds (51, 52) welded to the fuel tank (5) by resistance welding are provided on the first plate section (41).

11. A saddle-riding vehicle according to at least one of the claims 8 to 10, **characterized in that** a plurality of outer weld (53, 54, 55, 56) welded to the fuel tank (5) by resistance welding are provided on the second plate section (42).

## Patentansprüche

1. Ein Sattel-Reit-Fahrzeug mit:
einem Fahrzeugrahmen (2);
einem Kraftstofftank (5), der eine erste Einbuchtung (21) beinhaltet, die nach oben eingedrückt und in einer Bodenfläche ausgebildet ist, ein Teil (16a) des Fahrzeugrahmens (2) ist in der ersten Einbuchtung (21) angeordnet;
ein Tank-Lagerelement (22) zum Lagern des Kraftstofftanks (5), das Tank-Lagerelement (22) ist so vorgesehen, dass es von dem Fahrzeugrahmen (2) in der Querrichtung des Fahrzeugs vorsteht; und
zumindest ein Befestigungselement (23, 24), das einen Plattenabschnitt (32), angebracht an dem Kraftstofftank (5) und einen ersten Vorsprung (31) beinhaltet, der von dem Plattenabschnitt (32) vorspringt, der erste Vorsprung (31) bildet einen Aufnahmeabschnitt, in dem das Tank-Lagerelement (22) eingesetzt ist; wobei
der erste Vorsprung (31) beinhaltet eine erste Wand (36) zum Kontakt des Tank-Lagerelements (22), die erste Wand (36) ist entlang einer Kurvenform des ersten Vorsprungs (31) positioniert, eine zweite Wand (37), vorgesehen an einem Ort gegenüber der ersten Wand (36), die zweite Wand (37) ist entlang der Kurvenform des ersten Vorsprungs (31) positioniert, und der Plattenabschnitt (32) beinhaltet einen ersten Plattenabschnitt (41), verbunden mit der ersten Wand (36), und einem zweiten Plattenabschnitt (42), verbunden mit der zweiten Wand (37), **dadurch gekennzeichnet, dass**
der erste Plattenabschnitt (32), welcher diese erste und zweite Abschnitte beinhaltet, und der erste Vorsprung (31) integral ausgebildet sind, die zweite Wand (37) ist getrennt durch einen Spalt von der ersten Wand (36) angeordnet und ein Verbindungsabschnitt (38) des ersten Vorsprungs (31) verbindet eine Kante der ersten Wand (36) und eine Kante der zweiten Wand (37), und die zweite Wand (37) ist außerhalb der ersten Wand (36) angeordnet, wenn von der Seite des Befestigungselements (23) betrachtet.

2. Ein Sattel-Reit-Fahrzeug gemäß Anspruch 1, **gekennzeichnet durch** ein Paar von diesen Befestigungselementen (23, 24), angebracht an dem Kraftstofftank (5).

3. Ein Sattel-Reit-Fahrzeug gemäß Anspruch 2, **dadurch gekennzeichnet, dass** das Tank-Lagerelement (22) ein Lager-Rahmenelement (25), das derart angeordnet ist, dass es von dem Teil (16a) des Fahrzeugrahmens (2), quer mit Bezug auf das Fahrzeug, vorsteht, und ein Paar von Stoß-Aufnahme-Elementen (26, 27), jeweils angebracht an diesen Befestigungselementen (23, 24), beinhaltet.

4. Ein Sattel-Reit-Fahrzeug gemäß zumindest einem der Ansprüche 1 bis 3, **dadurch gekennzeichnet, dass** der erste Vorsprung (31) eine Öffnung (31 c, 31 d) in einer Kante des Befestigungselements (23, 24) bildet.

5. Ein Sattel-Reit-Fahrzeug gemäß zumindest einem der Ansprüche 1 bis 4, **dadurch gekennzeichnet, dass** zumindest ein zweiter Vorsprung (33, 34, 35) von dem Plattenabschnitt (32) vorspringt und eine Öffnung in einer Kante des zweiten Plattenabschnitts (42) bildet; wobei ein Raum, umfasst durch den zweiten Vorsprung (33, 34, 35) und dem Kraftstofftank (5), mit einem Raum, umfasst durch den zweiten Vorsprung (31) und dem Kraftstofftank (5), kommuniziert.

6. Ein Sattel-Reit-Fahrzeug gemäß Anspruch 5, **gekennzeichnet durch** eine Mehrzahl von diesen zweiten Vorsprüngen (33, 34, 35), die von dem zweiten Plattenabschnitt (42) vorspringen und Öffnungen an der Kante des zweiten Plattenabschnitts (42) bilden, diese Mehrzahl von zweiten Vorsprüngen beinhalten einen oberen zweiten Vorsprung (33), einen unteren zweiten Vorsprung (34) und einen hinteren zweiten Vorsprung (35), dieser obere zweite Vorsprung (33) ist über dem ersten Vorsprung (31) angeordnet und erstreckt sich vertikal, dieser untere zweite Vorsprung (34) ist unter dem ersten Vorsprung (31) angeordnet und erstreckt sich vertikal, und dieser hintere zweite Vorsprung (35) ist hinter dem ersten Vorsprung (31) angeordnet und erstreckt sich in eine Vor- und Rückrichtung des Fahrzeugs.

7. Ein Sattel-Reit-Fahrzeug gemäß zumindest einem der Ansprüche 1 bis 6, **dadurch gekennzeichnet, dass** der Plattenabschnitt (32) des Befestigungselements (23, 24) an dem Kraftstofftank (5) durch Widerstandsschweißen verschweißt ist.

8. Ein Sattel-Reit-Fahrzeug gemäß Anspruch 7, **dadurch gekennzeichnet, dass** zumindest eine Innenverschweißung (51, 52), verschweißt an dem Kraftstofftank (5) durch Widerstandsschweißen, in dem ersten Plattenabschnitt (41) vorgesehen ist; und zumindest eine Außenverschweißung (53, 54, 55, 56), verschweißt an dem Kraftstofftank (5) durch Widerstandsschweißen, an dem zweiten Plattenabschnitt (42) vorgesehen ist.

9. Ein Sattel-Reit-Fahrzeug gemäß Anspruch 8, **dadurch gekennzeichnet, dass** eine zweite Einbuchtung (37a, 37b), eingerückt zu einem Innenraum der ersten Einbuchtung (21), an einem Ort der zweiten Wand (37) des ersten Vorsprungs (31) des Befestigungselements (23, 24) benachbart zu dieser Außenverschweißung (53, 54) eingerückt ist.

10. Ein Sattel-Reit-Fahrzeug gemäß Anspruch 8 oder 9, **dadurch gekennzeichnet, dass** eine Mehrzahl von Innenverschweißungen (51, 52), verschweißt mit dem Kraftstofftank (5) durch Widerstandsschweißen, an dem ersten Plattenabschnitt (41) vorgesehen sind.

11. Ein Sattel-Reit-Fahrzeug gemäß zumindest einem der Ansprüche 8 bis 10, **dadurch gekennzeichnet, dass** eine Mehrzahl von Außenverschweißungen (53, 54, 55, 56), verschweißt mit dem Kraftstofftank (5) durch Widerstandsschweißen, an dem zweiten Plattenabschnitt (42) vorgesehen sind.

## Revendications

1. Véhicule à selle, comprenant :
un châssis (2) ;
un réservoir de carburant (5) comprenant un premier renfoncement (21) renfoncé vers le haut et formé dans une surface de plancher, une partie (16a) du châssis (2) étant agencée dans le premier renfoncement (21) ;
un élément de support du réservoir (22) pour supporter le réservoir de carburant (5), l'élément de support du réservoir (22) étant pourvu de manière à se projeter depuis le châssis (2) en direction transversale du véhicule ; et
au moins un élément de fixation (23, 24) comportant une section de plaque (32) fixée au réservoir de carburant (5) et une première projection (31) qui se projette depuis la section de plaque (32), la première projection (31) constituant une section d'insertion dans laquelle est inséré l'élément de support du réservoir (22) ; dans lequel
la première projection (31) comprend une première paroi (36) pour entrer en contact avec l'élément de support du réservoir (22), la première paroi (36) est agencée le long d'une forme incurvée de la première projection (31), une deuxième paroi (37) est pourvue dans une position opposée à la première paroi (36), la deuxième paroi (37) est agencée le long d'une forme incurvée de la première projection (31), et la section de plaque (32) comporte une première section de plaque (41) connectée à la première paroi (36) et une deuxième section de plaque (42) connectée à la deuxième paroi (37),
**caractérisé**
**en ce que** la section de plaque (32) qui comporte lesdites première et deuxième sections et la première projection (31) sont formées conjointement de façon intégrale, la deuxième paroi (37) est séparée de la première paroi (36) par un intervalle, une section de connexion (38) de la première projection (31) connecte un bord de la première paroi (36) à un bord de la deuxième paroi (37), et la deuxième paroi (37) est agencée à l'extérieur de la première paroi (36) lorsqu'elle est vue depuis le côté de l'élément de fixation (23).

2. Véhicule à selle selon la revendication 1, **caractérisé par** une paire de dits éléments de fixation (23, 24) fixés au réservoir de carburant (5).

3. Véhicule à selle selon la revendication 2, **caractérisé en ce que** l'élément de support du réservoir (22) comporte un élément de châssis de support (25) agencé de manière à se projeter transversalement depuis la partie (16a) du châssis (2) par rapport au véhicule, et une paire d'éléments amortisseurs (26, 27) fixés respectivement auxdits éléments de fixation (23, 24).

4. Véhicule à selle selon au moins l'une des revendications 1 à 3, **caractérisé en ce que** la première projection (31) forme une ouverture (31c, 31d) dans un bord de l'élément de fixation (23, 24).

5. Véhicule à selle selon au moins l'une des revendications 1 à 4, **caractérisé par** au moins une deuxième projection (33, 34, 35) qui se projette depuis la section de plaque (32) et forme une ouverture dans un bord de la deuxième section de plaque (42) ; dans lequel un espace enfermé par la deuxième projection (33, 34, 35) et le réservoir de carburant (5) communique avec un espace enfermé par la première projection (31) et le réservoir de carburant (5).

6. Véhicule à selle selon la revendication 5, **caractérisé par** une pluralité de dites deuxièmes projections (33, 34, 35) qui se projettent depuis la deuxième section de plaque (42) et forment des ouvertures sur le bord de la deuxième section de plaque (42), ladite pluralité de deuxièmes projections comprenant une deuxième projection supérieure (33), une deuxième projection inférieure (34) et une deuxième projection arrière (35), ladite deuxième projection supérieure (33) est agencée au-dessus de la première projection (31) et s'étend verticalement, ladite deuxième projection inférieure (34) est agencée en dessous de la première projection (31) et s'étend verticalement, et ladite deuxième projection arrière (35) est agencée à l'arrière de la première projection (31) et s'étend en direction de l'avant et de l'arrière du véhicule.

7. Véhicule à selle selon au moins l'une des revendications 1 à 6, **caractérisé en ce que** la section de plaque (32) de l'élément de fixation (23, 24) est soudée au réservoir de carburant (5) par soudage par résistance.

8. Véhicule à selle selon la revendication 7, **caractérisé**
**en ce qu'**au moins une soudure interne (51, 52) soudée au réservoir de carburant (5) par soudage par résistance est pourvue sur la première section de plaque (41) ; et
**en ce qu'**au moins une soudure externe (53, 54, 55, 56) soudée au réservoir de carburant (5) par soudage par résistance est pourvue sur la deuxième section de plaque (42).

9. Véhicule à selle selon la revendication 8, **caractérisé en ce qu'**un deuxième renfoncement (37a, 37b) renfoncé vers l'intérieur du premier renfoncement (21) est pourvu à une position de la deuxième paroi (37) de la première projection (31) de l'élément de fixation (23, 24) adjacente à ladite soudure externe (53, 54).

10. Véhicule à selle selon la revendication 8 ou 9, **caractérisé en ce qu'**une pluralité de soudures internes (51, 52) soudées au réservoir de carburant (5) par soudage par résistance sont pourvues sur la première section de plaque (41).

11. Véhicule à selle selon au moins l'une des revendications 8 à 10, **caractérisé en ce qu'**une pluralité de soudures externes (53, 54, 55, 56) soudées au réservoir de carburant (5) par soudage par résistance sont pourvues sur la deuxième section de plaque (42).
